# EUROPEAN PATENT APPLICATION

(11) **EP 3 492 315 A1**
(43) Date of publication of application: **05.06.2019**
(21) Application number: 18208016.8
(22) Date of filing: 23.11.2018
(51) Int. Cl.: B60P 3/06, B60P 3/07, B60P 3/12, B60P 3/40

(54) **TRAILER ASSEMBLY**

(30) Priority: 30.11.2017 IT 201700137896
(71) Applicant: Pavelli SRL, 31050 Fanzolo Di Vedelago (TV) (IT)
(72) Inventor: PAVELLI, Giovanni Battista, 31050 FANZOLO DI VEDELAGO (TV) (IT)
(74) Representative: Robba, Pierpaolo

(57) **Abstract**

Lowboy trailer assembly, comprising a chassis capable of being associated, at a front region thereof, with a tractor and comprising a low deck having a rear region (13a) associated with a first rear supporting assembly (15) for a first set of rear wheels and with a second rear supporting assembly (17) for a second set of rear wheels. The first rear supporting assembly (15) and the first set of rear wheels are arranged on the right relative to the longitudinal axis of the chassis and the second rear supporting assembly (17) and second set of rear wheels are arranged on the left relative to the longitudinal axis of the chassis. The trailer assembly further comprises movement means (27, 28, 29, 30) adapted to move, on command, the first rear supporting assembly (15) and the second rear supporting assembly (17) relative to the chassis, so that the trailer assembly shifts from a ride attitude, in which the trailer assembly can move in a conventional manner on a road surface, to a loading/unloading attitude, in which the trailer assembly can allow loading/unloading operations through the rear region (13a) of the low deck. The movement means (27, 28, 29, 30) comprise first movement means (27, 28) and second movement means (29, 30). The first movement means (27, 28) are adapted to maintain at least the rear supporting assemblies (15, 17) and the wheels (20, 22) of the first and second sets of rear wheels (16, 18) in a position raised from the road surface. The second movement means (29, 30) are arranged to laterally translate the first rear supporting assembly (15) towards an outer side position on the right relative to the low deck, and to laterally translate the second rear supporting assembly (17) towards an outer side position on the left relative to the low deck (13), thus clearing and making accessible the rear region (13a) of the low deck.

## Description

### Technical Field

The present invention generally relates to a trailer assembly and more particularly to a semitrailer for transporting vehicles, specifically heavy vehicles such as buses or trucks. The semitrailer finds particular application in the field of breakdown service, for recovering broken-down vehicles.

The present invention further relates to a method of loading and unloading vehicles onto and from the semitrailer assembly.

### Prior Art

In the field of vehicle transport, in particular transport of heavy vehicles such as buses or trucks, it is known to use lowboy semitrailers (or trailers), i.e. semitrailers with a chassis having, between a neck and a set of rear wheels, a deck (low deck) at a lower elevation than the neck and the wheels. Such semitrailers allow transporting vehicles in such a way that the overall height of the semitrailer and the transported vehicle does not exceed the height permitted by the Highway Code.

For vehicle loading and unloading operations, some of such semitrailers are detached from the respective tractor, so that loading and unloading take place from the front end of the semitrailer, generally provided with a detachable swan-neck.

Such semitrailers have the drawback that they require extremely long loading and unloading times, as well as a sufficiently wide area for carrying out the manoeuvres.

In the alternative, other semitrailers provide for carrying out the loading and unloading operations through the rear end of the semitrailer, by making the vehicle pass above the set of rear wheels by means of suitable ramps located both at the rear end of the semitrailer and on the deck, in order to connect the set of wheels to the road surface and to the deck itself.

In such semitrailers, the ramps are to be sufficiently long to allow the vehicle pass above the set of rear wheels without the wheels contacting the bottom of the vehicle, thus hindering its advance. Thus, such semitrailers have the drawback that they require sufficiently wide spaces, besides giving rise to safety problems related with the excessive height reached by the vehicle when passing above the set of rear wheels.

In order to obviate such drawbacks, document EP 2689957 A1 proposes a solution providing for rotating the set of rear wheels of a semitrailer from a position where the axle of the set of rear wheels is horizontally arranged to a position where the axle is vertically arranged. When the set of rear wheels is in the position where the axle is vertically arranged, the semitrailer is in loading/unloading attitude and then a vehicle can be directly loaded or unloaded from the rear region of the low deck, thereby eliminating the need for the vehicle to pass above the set of rear wheels.

Another solution for obviating the above drawbacks, disclosed in document WO 2009055826 A1, uses two sets of rear wheels, a right and a left set, each capable of rotating outwards, parallel to the road surface, about a respective vertical axis, so as to attain a loading/unloading attitude in which the passage towards the rear region of the low deck is cleared, thereby eliminating the need for the vehicle to pass above the sets of rear wheels.

Both solutions mentioned above have however some problems.

The solution disclosed in EP 2689957 A1, providing for the upward rotation of the whole set of rear wheels, entails considerable movement efforts, thus making the structure more subject to stresses and thereof less reliable.

The solution disclosed in WO 2009055826 A1, providing for the outward rotation of both sets of rear wheels, entails a considerable lateral bulk in the loading/unloading attitude, thus making the operations of recovering a broken-down vehicle difficult and dangerous. Such a problem is still more apparent if the semitrailer is equipped with right and left rear wheel sets each having two or more axles arranged one behind the other.

It is an object of the present invention to overcome the problems and the limitations of the prior art, by providing a semitrailer that is reliable and at the same time is capable of making loading/unloading operations easy, by limiting the space needed for such operations.

The above and other objects are achieved by the semitrailer as claimed in the appended claims.

### Description of the Invention

The lowboy trailer assembly according to the present invention, for instance a semitrailer or a trailer, comprises a chassis capable of being associated, at a front region thereof, with a tractor and having a low deck. The low deck has a rear region associated with a first rear supporting assembly for a first set of rear wheels and with a second rear supporting assembly for a second set of rear wheels.

The first rear supporting assembly and the first set of rear wheels are arranged on the right relative to the longitudinal axis of the chassis, and the second rear supporting assembly and the second set of rear wheels are arranged on the left relative to the longitudinal axis of the chassis. Moreover, the first set of rear wheels and the second set of rear wheels are located behind the low deck and are sets of steered wheels.

The trailer assembly further comprises movement means adapted to move, on command, the first rear supporting assembly and the second rear supporting assembly relative to the chassis, so that the trailer assembly shifts from a ride attitude, in which the trailer assembly can move in a conventional manner on a road surface, to a loading/unloading attitude, in which the trailer assembly can allow loading or unloading operations through the rear region of the low deck.

The movement means comprise first movement means and second movement means. The first movement means are arranged to maintain at least the rear supporting assemblies and the wheels of the first and second sets of rear wheels, and preferably also the low deck, in a position raised from the road surface, whereas the second movement means are arranged to laterally translate the first rear supporting assembly towards an outer side position on the right relative to the low deck, and to laterally translate the second rear supporting assembly towards an outer side position on the left relative to the low deck, thus clearing the rear region of the low deck and making it accessible.

According to the present invention, the first and the second rear supporting assemblies comprise a respective longitudinal bar. Each longitudinal bar is arranged to slide around a corresponding guide provided in the low deck, in such a way that the second movement means laterally translate the rear supporting assemblies by making the longitudinal bars slide on the corresponding guides.

According to a preferred feature, the longitudinal bars and the corresponding guides are arranged perpendicularly to the longitudinal axis of the chassis and parallel to the road surface. Preferably, moreover, the guides are out of line relative to each other.

The method of loading and unloading vehicles onto and from the trailer assembly according to the present invention comprises the following steps:
- providing the trailer assembly in ride attitude;
- actuating the first movement means of the trailer assembly, so as to maintain at least the rear supporting assemblies and the wheels of the sets of rear wheels, and preferably also the low deck, in a position raised from the road surface,
- making the trailer assembly take a loading/unloading attitude in which the rear region of the low deck is cleared and accessible, by laterally translating, by means of second movement means of the trailer assembly, the first rear supporting assembly towards an outer side position on the right relative to the low deck and the second rear supporting assembly towards an outer side position on the left relative to the low deck,
- loading/unloading a vehicle onto/from the low deck, through the rear region of the low deck.

Preferably, the step of making the trailer assembly take a loading/unloading attitude further provides for lowering the low deck as far as it contacts the road surface.

### Brief Description of the Figures

The above and other features and advantages of the invention will become more apparent from the following description of preferred embodiments given by way of nonlimiting examples with reference to the accompanying Figures, in which elements denoted by a same or similar reference numeral denote components having the same or similar function and construction and in which:
- Fig. 1 is a side view of the trailer assembly according to the present invention, in ride attitude;
- Fig. 2 is a top view of the trailer assembly shown in Fig. 1;
- Fig. 3 is a rear view of the trailer assembly shown in Fig. 1;
- Fig. 4 is a side view of the trailer assembly according to the present invention, in ride attitude and with the deck extended;
- Fig. 5 is a top view of the trailer assembly shown in Fig. 4;
- Fig. 6 is a side view of the trailer assembly according to the present invention, in a first intermediate configuration;
- Fig. 7 is a side view of the trailer assembly according to the present invention, in a second intermediate configuration;
- Fig. 8 is a top view of the trailer assembly according to the present invention, in loading/unloading attitude;
- Fig. 8a is an enlarged view of a detail of Fig. 8;
- Fig. 9 is a rear view of the trailer assembly shown in Fig. 8;
- Fig. 10 is a side view of the trailer assembly according to the present invention, in loading/unloading attitude and with the low deck contacting the road surface;
- Fig. 11 is a top view of the trailer assembly shown in Fig. 10;
- Fig. 12 is a side view of the trailer assembly according to the present invention, in loading/unloading attitude and with the neck detached;
- Fig. 13 is a top view of the trailer assembly shown in Fig. 12.

### Description of some Preferred Embodiments of the Invention

Referring to the accompanying Figures, there is shown a preferred embodiment of a trailer assembly 10 according to the invention, more particularly a lowboy semitrailer, to which reference is made hereinafter.

Semitrailer 10 includes a chassis 11 that can be associated, in known manner, at a front region 14 thereof and preferably by means of a neck 34, with a tractor (not shown). Chassis 11 includes a low deck 13 having a rear region 13a associated with a first rear supporting assembly 15 for a first set of rear wheels 16 and with a second rear supporting assembly 17 for a second set of rear wheels 18.

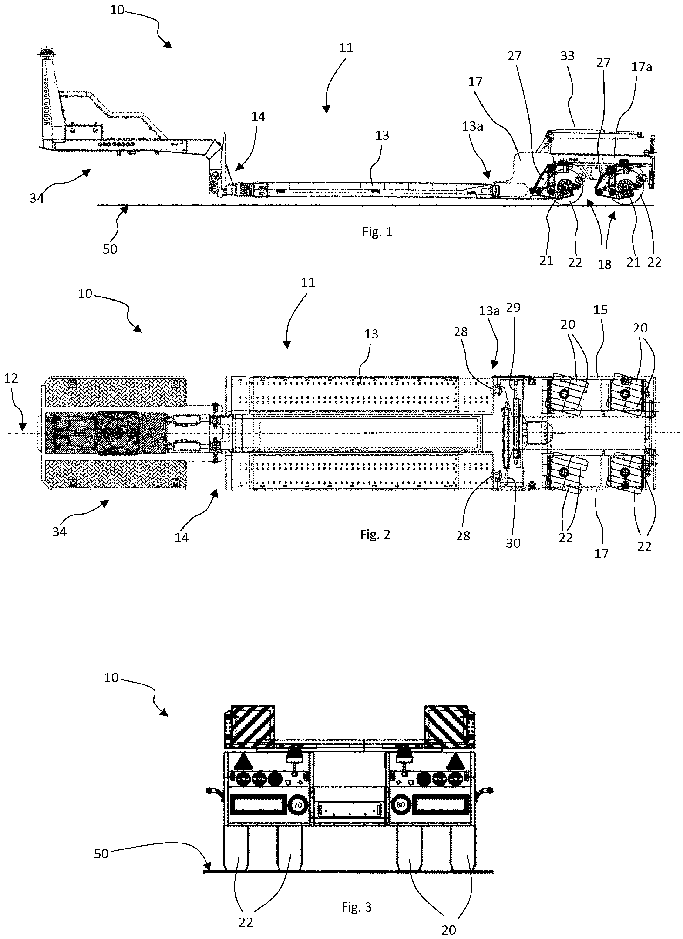

The first rear supporting assembly 15 and the second rear supporting assembly 17, and hence the corresponding first and second sets of rear wheels 16, 18, are located behind low deck 13. Preferably, rear wheel sets 16, 18 are sets of steered wheels. More particularly moreover, with reference to Fig. 2, the first rear supporting assembly 15 and the corresponding first set of rear wheels 16 are arranged on the right relative to longitudinal axis 12 of chassis 11, and the second rear supporting assembly 17 and the corresponding second set of rear wheels 18 are arranged on the left relative to longitudinal axis 12 of chassis 11.

Each set of rear wheels 16, 18 includes at least one axle, e.g. two axles 19, 21, and each axle 19, 21 preferably supports at least two wheels 20, 22. Each axle 19, 21 longitudinally extends in a direction substantially perpendicular to longitudinal axis 12 of chassis 11 and parallel to road surface 50.

In accordance with the invention, the first and second rear supporting assemblies 15, 17 are associated with low deck 13 through at least one respective tube-shaped longitudinal bar 23, 25. Each longitudinal bar 23, 25 is arranged to slide around a corresponding guide 24, 26 provided in low deck 13. For instance, rear supporting assemblies 15, 17 comprise each a longitudinal bar 23, 25 with square cross section, and low deck 13 comprises a guide 24, 26 with square cross section for each longitudinal bar 23, 25. In accordance with other embodiments, each rear supporting assembly could have several longitudinal bars, to which respective guides correspond in the low deck.

Preferably, longitudinal bars 23, 25 and the corresponding guides 24, 26 are arranged perpendicularly to longitudinal axis 12 of chassis 11 and parallel to road surface 50. Preferably, moreover, guides 24, 26 in low deck 13 are out of line relative to each other.

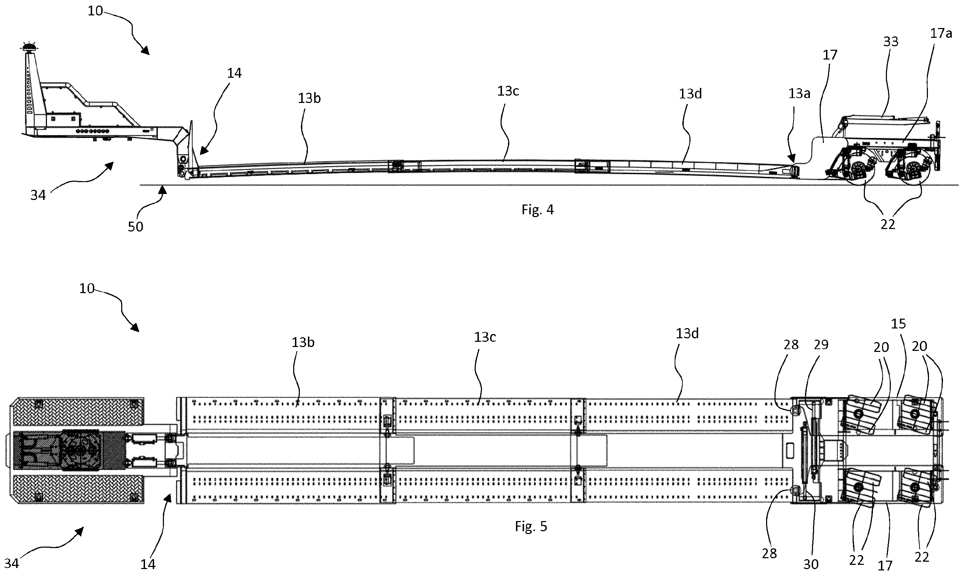

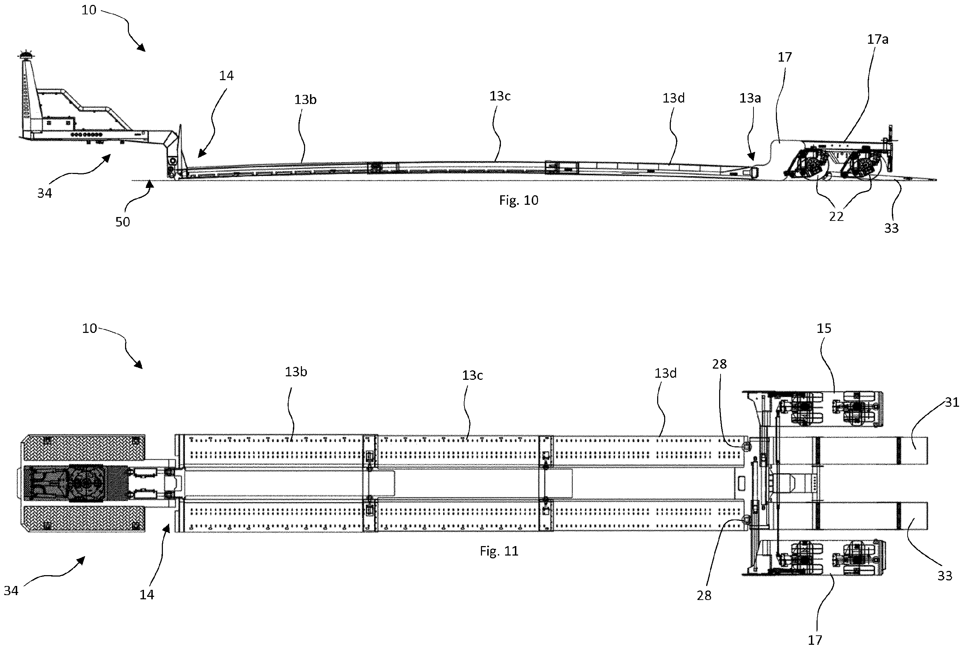

According to the invention, semitrailer 10 includes movement means 27, 28, 29, 30 adapted to move, on command, the first rear supporting assembly 15 and the second rear supporting assembly 17 relative to chassis 11 so that the trailer shifts from a ride attitude, shown in Figs. 1 to 5, in which semitrailer 10 can move in conventional manner on a road surface 50 while being trailed by a tractor, to a loading/unloading attitude, shown in Figs. 10 to 13, in which semitrailer 10 can allow loading or unloading operations through rear region 13a of low deck 13. More particularly, in ride attitude, rear supporting assemblies 15, 17 are located behind low deck 13, which is not in contact with road surface 50, whereas in loading/unloading attitude the first rear supporting assembly 15 and the second rear supporting assembly 17 are laterally shifted relative to low deck 13, on the right and the left thereof, respectively, so that rear region 13a of low deck 13 is cleared and loading/unloading operations onto/from low deck 13 can be carried out through said region.

The movement means comprise first movement means 27, 28 and second movement means 29, 30.

In accordance with the preferred embodiment, the first movement means 27, 28 are arranged to bring rear supporting assemblies 15, 17 and wheels 20, 22 of rear wheel sets 16, 18 of semitrailer 10 in a position raised from road surface 50.

In accordance with the preferred embodiment, the first movement means 27, 28 include a suspension, preferably a hydraulic linkage suspension 27, of known type, for each axle 21, 22, and at least one jack 28, of known type, for instance two jacks 28 connected to low deck 13.

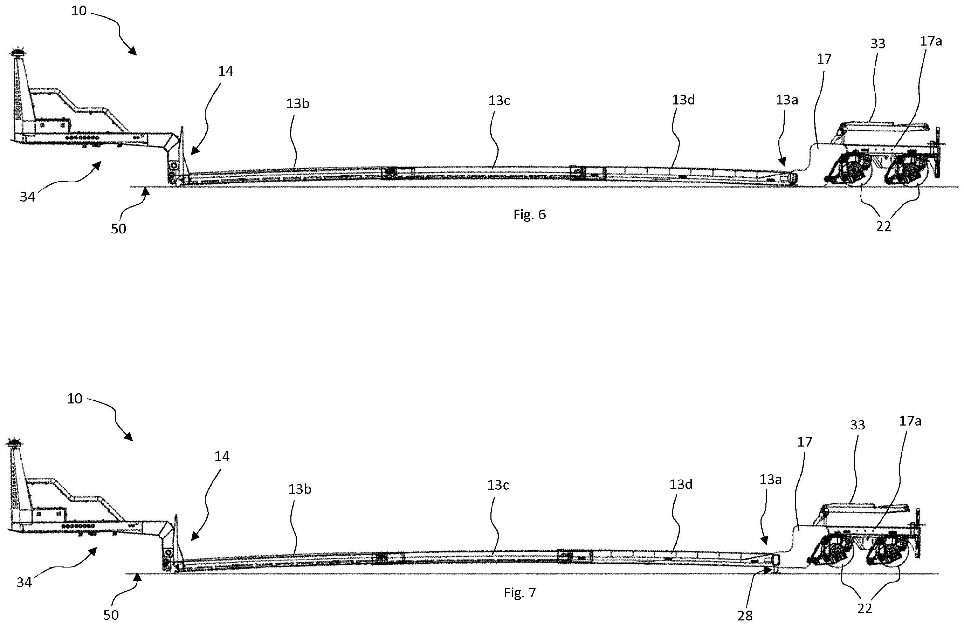

In accordance with the preferred embodiment, each hydraulic linkage suspension 27 is preferably operable independently of the other ones. Suspensions 27 act between the first rear supporting assembly 15 and the corresponding first set of rear wheels 16 and between the second rear supporting assembly 17 and the corresponding second set of rear wheels 18, and are arranged to move, on command, axles 19 of the first set of rear wheels 16 towards/away from an upper region 15a of the first rear supporting assembly 15, and axles 21 of the second set of rear wheels 18 towards/away from an upper region 17a of the second rear supporting assembly 17. More particularly, by means of suspensions 27, axles 19, 21 of rear wheel sets 16, 18 are moved, preferably simultaneously, closer to upper regions 15a, 17a of the corresponding rear supporting assemblies 15, 17 from a position they take in ride attitude. During such a movement, wheels 20, 22 of rear wheel sets 16, 18 remain in contact with road surface 50, and therefore upper regions 15a, 17a of the corresponding supporting assemblies 15, 17 are lowered towards road surface 50. This results in a downward movement, i.e. a movement towards road surface 50, of rear supporting assemblies 15, 17 and of low deck 13 connected to rear supporting assemblies 15, 17, as far as suspensions 27 attain an end position in which low deck 13 is in contact with road surface 50, as shown in Fig. 6. Preferably, when low deck 13 is in contact with road surface 50, also rear supporting assemblies 15, 17 are in contact with road surface 50. Preferably, linkage suspensions 27 are provided with suitable stop members, of known type, arranged to keep the suspensions blocked in said end position.

In accordance with the preferred embodiment, jacks 28 connected to the low deck act between low deck 13 and road surface 50 and are arranged to raise low deck 13, preferably when low deck 13 is in contact with road surface 50, thereby raising also rear supporting assemblies 15, 17 and wheels 20, 22 from road surface 50, as shown in Fig. 7.

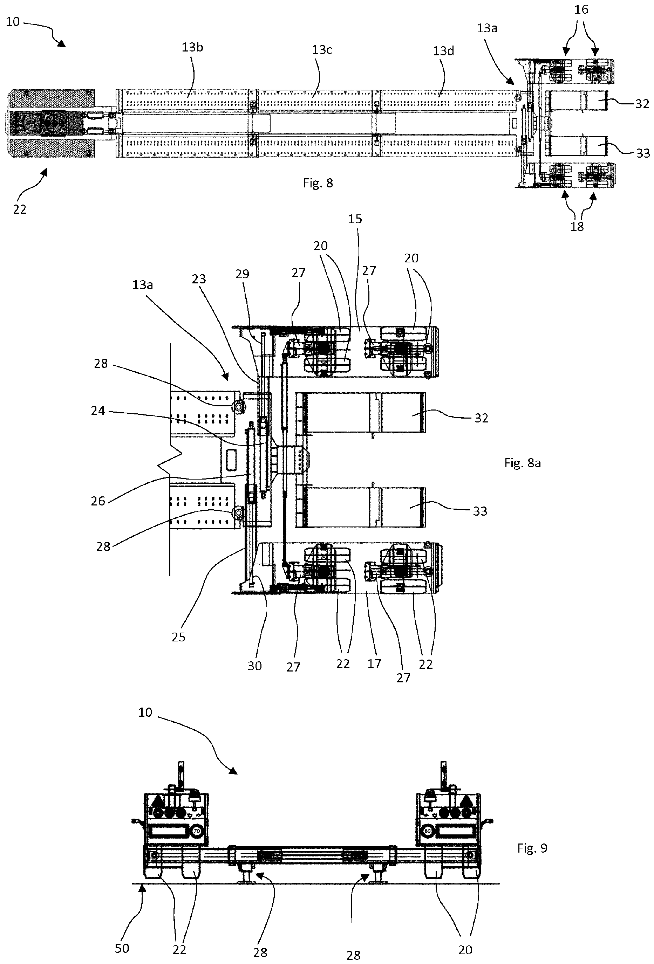

The second movement means 29, 30 are arranged to laterally translate the first rear supporting assembly 15 towards an outer side position, on the right relative to low deck 13, and to laterally translate the second rear supporting assembly 17 towards an outer side position, on the left relative to low deck 13. Rear supporting assemblies 15, 17 are translated relative to low deck 13 by making longitudinal bars 23, 25 slide inside the corresponding guides 24, 26 in low deck 13, and therefore rear supporting assemblies 15, 17 are translated in a direction perpendicular to longitudinal axis 12 of chassis 11 of semitrailer 10. More particularly, in accordance with the preferred embodiment, when low deck 13, and hence rear supporting assemblies 15, 17 and wheels 20, 22 of rear wheel sets 16, 18 are moved to the raised position relative to road surface 50, rear supporting assemblies 15, 17 are laterally translated by means of the second movement means 29, 30, thus clearing rear region 13a of low deck 13 and making it accessible, as shown in Figs. 8, 9. When rear region 13a of the low deck is accessible, semitrailer 10 is in loading/unloading attitude.

In order to translate rear supporting assemblies 15, 17 laterally outwards sufficiently to completely clear rear region 13a of low deck 13, the above-mentioned out-of-line arrangement of guides 24, 26 in low deck 13 is particularly advantageous, since it allows having longitudinal bars 23, 25 sufficiently long to achieve the aim mentioned above.

In accordance with the preferred embodiment, the second movement means 29, 30 comprise a first hydraulic piston 29, acting between the first rear supporting assembly 15 and low deck 13, and a second hydraulic piston 30, acting between the second rear supporting assembly 17 and low deck 13. Such hydraulic pistons 29, 30, which act perpendicularly to longitudinal axis 12 of chassis 11 and parallel to axles 19, 21 of rear wheel sets 16, 18 and are preferably operable independently of each other, are arranged to push the corresponding rear supporting assemblies, thus laterally translating them relative to low deck 13. Preferably, guides 24, 26 are hollow and hydraulic pistons 29, 30 are located inside said guides 24, 26.

During the outward translational movement of rear supporting assemblies 15, 17, axles 19, 21 of rear wheel sets 16, 18 preferably remain substantially perpendicular to longitudinal axis 12 of chassis 11 and substantially parallel to road surface 50.

In accordance with the preferred embodiment, jacks 28 can be operated again, after operation of hydraulic pistons 29, 30, in order to lower again low deck 13, and hence rear supporting assemblies 15, 17, as far as low deck 13, rear supporting assemblies 15, 17 and wheels 20, 22 of rear wheel sets 16, 18 arrive again in contact with road surface 50, as shown in Fig. 10.

In accordance with a variant embodiment, not shown in the Figures, the first movement means only comprise jacks, connected either to the low deck or to the rear supporting assemblies and arranged to raise the low deck or the rear supporting assemblies, thereby raising also the wheels of the sets of rear wheels of the semitrailer from the road surface. Such a variant embodiment comprises second movement means, similar to those disclosed in connection with the preferred embodiment and arranged to be operated when the wheels of the sets of rear wheels are raised from the road surface, in order to clear the rear region of the low deck and make it accessible, that is, in order to make the trailer assembly take the loading/unloading attitude. Preferably, said jacks can be operated again after operation of the second movement means in order to lower again the low deck or the rear supporting assemblies as far as the wheels of the sets of rear wheels arrive again in contact with the road surface.

According to the present invention, optionally semitrailer 10 further includes a first and a second ramp 32, 33 connected to rear region 13a of low deck 13 and including several elements hinged to each other. When semitrailer 10 is in ride attitude, ramps 32, 33 are folded and placed above rear supporting assemblies 15, 17, as shown for instance in Fig. 1, whereas, when semitrailer 10 is in loading/unloading attitude, ramps 32, 33 are deployed and leaned on road surface 50, in order to make the operations of loading/unloading a vehicle onto/from low deck 13 easier, as shown in Figs. 10 to 13.

In accordance with the present invention, preferably low deck 13 is a telescopically extendable deck, comprising e.g. three sections 13b, 13c, 13d arranged to be inserted into and to slide inside each other, in known manner, in order to allow adapting the length of low deck 13 to the length of the vehicle to be transported.

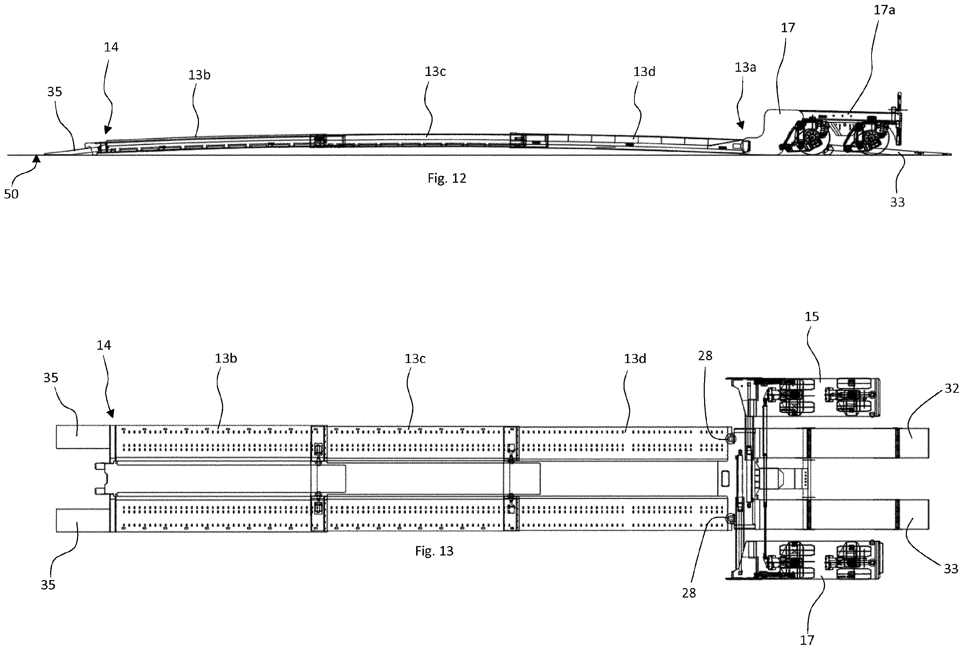

In accordance with the present invention, neck 34 of trailer assembly 10 is preferably detachable from low deck 13, as shown in Figs. 12, 13. Moreover, trailer assembly 10 preferably includes ramps 35 connected to front region 14 and utilisable, in known manner, when neck 34 is detached from low deck 13.

The method of loading and unloading vehicles onto and from semitrailer 10 according to the preferred embodiment of the present invention is as follows.

In order to load or unload a vehicle onto/from semitrailer 10 that initially is in ride attitude (Figs. 1 to 5), as a first step linkage suspensions 27 are operated, thus lowering low deck 13 and rear supporting assemblies 15, 17 as far as they arrive in contact with road surface 50 (Fig. 6). Then jacks 28 are operated, thereby raising low deck 13, rear supporting assemblies 15, 17 and wheels 20, 22 of rear wheel sets 16, 18 from road surface 50 (Fig. 7).

In a subsequent step, semitrailer 10 is made to take the loading/unloading attitude by operating hydraulic pistons 29, 30, i.e. by laterally translating the first rear supporting assembly 15 towards an outer side position, on the right relative to low deck 13, and the second rear supporting assembly 17 towards an outer side position, on the left relative to low deck 13. At the end of the lateral translation of rear supporting assemblies 15, 17, rear region 13a of low deck 13 is cleared and accessible (Figs. 8, 9).

Preferably, the step of making semitrailer 10 take the loading/unloading attitude provides moreover for operating again jacks 28, thereby lowering again low deck 13, and hence rear supporting assemblies 15, 17, towards road surface 50, as far as low deck 13, rear supporting assemblies 15, 17 and wheels 20, 22 of rear wheel sets 16, 18 arrive again in contact with road surface 50 (Fig. 10).

Optionally, the step of making semitrailer 10 take the loading/unloading attitude provides moreover for positioning ramps 32, 33, if provided, on road surface 50 (Figs. 10, 11).

Optionally, the step of making semitrailer 10 take the loading/unloading attitude provides moreover for detaching neck 34 from low deck 13 and using ramps 35 connected to front region 14 of low deck 13 (Figs. 12, 13).

Thereafter, the operation of loading/unloading the vehicle onto/from low deck 13 through rear region 13a of low deck 13 is carried out. Loading can be carried out by using a winch the semitrailer is equipped with.

After having loaded/unloaded the vehicle onto/from low deck 13, semitrailer 10 is made to take the ride attitude.

Preferably, the step of making semitrailer 10 take the ride attitude provides for operating jacks 28 to raise low deck 13, rear supporting assemblies 15, 17 and wheels 20, 22 of rear wheel sets 16, 18 from the road surface, if such elements are not yet raised from the road surface.

The step of making semitrailer 10 take the ride attitude then provides for operating hydraulic pistons 29, 30, thereby bringing back rear supporting assemblies 15, 17 behind low deck 13 from their outer side positions by means of a translational movement. Thereafter, jacks 28 are operated to bring again low deck 13, rear supporting assemblies 15, 17 and wheels 20, 22 of rear wheel sets 16, 18 in contact with road surface 50, and linkage suspensions 27 are operated, thereby raising low deck 13 and rear supporting assemblies 15, 17 from road surface 50.

Ramps 32, 33, if any, are placed again in the position used during ride attitude.

The method of loading and unloading vehicles onto/from semitrailer 10 according to the variant embodiment of the present invention is as follows.

In order to load or unload a vehicle onto/from the semitrailer that initially is in ride attitude, as a first step the jacks are operated, thereby raising the low deck and hence raising the wheels of the sets of rear wheels from the road surface.

In a subsequent step, the semitrailer is made to take the loading/unloading attitude by operating the hydraulic pistons, i.e. by laterally translating the first rear supporting assembly towards an outer side position, on the right relative to the low deck, and the second rear supporting assembly towards an outer side position, on the left relative to the low deck. At the end of the lateral translation of the rear supporting assemblies, the rear region of the low deck is cleared and accessible.

Preferably, the step of making the semitrailer take the loading/unloading attitude provides moreover for operating again the jacks, thereby lowering again the low deck towards the road surface, as far as the wheels of the rear wheel sets arrive again in contact with the road surface.

Optionally, the step of making the semitrailer take the loading/unloading attitude provides moreover for positioning the ramps, if provided, on the road surface.

Optionally, the step of making the semitrailer take the loading/unloading attitude provides moreover for detaching the neck from the low deck and using the ramps connected to the front region of the low deck.

Thereafter, the operation of loading/unloading the vehicle onto/from the low deck through the rear region of the low deck is carried out. Loading can be carried out by using a winch the semitrailer is equipped with.

After having loaded/unloaded the vehicle onto/from the low deck, the semitrailer is made to take the ride attitude.

Preferably, the step of making the semitrailer take the ride attitude provides for operating the jacks to raise the wheels of the sets of rear wheels from the road surface, if such wheels are not yet raised from the road surface.

The step of making the semitrailer take the ride attitude provides for operating the hydraulic pistons, thereby bringing back the rear supporting assemblies behind the low deck from their outer side positions by means of a translational movement. Thereafter, the jacks are operated to bring again the wheels of the rear wheel sets in contact with the road surface.

The ramps, if any, are placed again in the position used during ride attitude.

Semitrailer 10 as described and shown can undergo further variants and modifications, lying within the same inventive principle.

## Claims

1. Lowboy trailer assembly, comprising:
- a chassis (11) capable of being associated, at a front region (14) thereof, with a tractor and comprising a low deck (13) having a rear region (13a) associated with a first rear supporting assembly (15) for a first set of rear wheels (16) and with a second rear supporting assembly (17) for a second set of rear wheels (18),
said first rear supporting assembly (15) and said first set of rear wheels (16) being arranged on the right relative to the longitudinal axis (12) of said chassis (11), and said second rear supporting assembly (17) and said second set of rear wheels (18) being arranged on the left relative to the longitudinal axis (12) of said chassis (11);
- movement means (27, 28, 29, 30) adapted to move, on command, said first rear supporting assembly (15) and said second rear supporting assembly (17) relative to said chassis (11), so that said trailer assembly shifts from a ride attitude, in which the trailer assembly (10) can move in a conventional manner on a road surface (50), to a loading/unloading attitude, in which the trailer assembly (10) can allow loading/unloading operations through the rear region (13a) of the low deck (13),
said movement means (27, 28, 29, 30) comprising first movement means (27, 28) and second movement means (29, 30),
said first movement means (27, 28) being adapted to maintain at least the rear supporting assemblies (15, 17) and the wheels (20, 22) of said first and second sets of rear wheels (16, 18) in a position raised from the road surface (50);
**characterized in that** said second movement means (29, 30) are arranged to laterally translate said first rear supporting assembly (15) towards an outer side position on the right relative to the low deck (13), and to laterally translate said second rear supporting assembly (17) towards an outer side position on the left relative to the low deck (13), thus clearing and making accessible the rear region (13a) of the low deck (13).

2. Trailer assembly according to claim 1, wherein said first and second rear supporting assemblies (15, 17) comprise each a respective longitudinal bar (23,25), each longitudinal bar (23, 25) being arranged to slide around a corresponding guide (24, 26) provided in the low deck (13), so that the second movement means (29) laterally translate said rear supporting assemblies (15, 17) by making the longitudinal bars (23, 25) slide on the corresponding guides (24, 26).

3. Trailer assembly according to claim 2, wherein the longitudinal bars (23, 25) and the corresponding guides (24, 26) are arranged perpendicularly to the longitudinal axis (12) of the chassis (11) and parallel to the road surface (50).

4. Trailer assembly according to claim 2 or 3, wherein said guides (24, 26) are not aligned with each other.

5. Trailer assembly according to any of the preceding claims, wherein the first movement means (27, 28) comprise linkage suspensions (28) acting between the first rear supporting assembly (15) and the corresponding first set of rear wheels (16) and between the second rear supporting assembly (17) and the corresponding second set of rear wheels (18), and at least one jack (28) connected to the low deck (13) and acting between the low deck (13) and the road surface (50).

6. Trailer assembly according to any of the preceding claims, wherein the second movement means (29, 30) comprise a first hydraulic piston (29), acting between the first rear supporting assembly (15) and the low deck (13), and a second hydraulic piston (30), acting between the second rear supporting assembly (17) and the low deck (13).

7. Trailer assembly according to any of the preceding claims, wherein said first set of rear wheels (16) and said second set of rear wheels (18) are arranged behind the low deck (13) and are sets of steered wheels.

8. Trailer assembly according to any of the preceding claims, wherein the low deck (13) is a telescopically extendable deck.

9. Method for loading and unloading vehicles onto/from a trailer (10) comprising a low deck (13) having a rear region (13a) associated with a first rear supporting assembly (15) for a first set of rear wheels (16) and with a second rear supporting assembly (17) for a second set of rear wheels (18), said method comprising the steps of:
- providing a trailer assembly (10) in ride attitude;
- actuating first movement means (27, 28) of the trailer assembly (10), so as to maintain at least the rear supporting assemblies (15, 17) and the wheels (20, 22) of the sets of rear wheels (16, 18) in a position raised from the road surface (50);
- making the trailer assembly (10) take a loading/unloading attitude in which the rear region (13a) of the low deck (13) is cleared and accessible, by laterally translating, by means of second movement means (29, 30) of the trailer assembly (10), the first rear supporting assembly (15) towards an outer side position on the right relative to the low deck (13) and the second rear supporting assembly (17) towards an outer side position on the left relative to the low deck (13);
- loading/unloading a vehicle onto/from the low deck (13), through the rear region (13a) of the low deck (13).

10. Method according to claim 9, wherein said step of making the trailer assembly (10) take a loading/unloading attitude further provides for lowering the low deck (13) as far as it contacts the road surface (50).
